# EUROPEAN PATENT SPECIFICATION

(11) **EP 4 177 600 B1**
(45) Date of publication and mention of the grant of the patent: **08.10.2025**
(21) Application number: 20943512.2
(22) Date of filing: 01.07.2020
(51) Int. Cl.: G01N 23/223, G01N 23/2204

(54) **X-RAY ANALYZER**
RÖNTGENANALYSATOR
ANALYSEUR À RAYONS X

(43) Date of publication of application: 10.05.2023
(73) Proprietor: SHIMADZU CORPORATION, Kyoto-shi, Kyoto 604-8511 (JP)
(72) Inventor: MORIHISA, Yuji, Kyoto-shi, Kyoto 604-8511 (JP); TANTRAKARN, Kriengkamol, Kyoto-shi, Kyoto 604-8511 (JP); KOBAYASHI, Kanji, Kyoto-shi, Kyoto 604-8511 (JP); SUZUKI, Keijiro, Kyoto-shi, Kyoto 604-8511 (JP)
(74) Representative: Müller-Boré & Partner Patentanwälte PartG mbB
(86) International application number: PCT/JP2020/025763
(87) International publication number: WO 2022/003850

(56) References cited:
- WO-A1-2004/088296
- WO-A1-2004/088296
- CN-A- 108 956 672
- JP-A- 2006 317 153
- JP-A- 2011 013 027
- JP-A- 2011 089 794
- JP-A- H04 331 349
- JP-A- H04 355 355
- US-A- 5 703 927
- US-A1- 2013 170 613

## Description

### Technical Field

The present invention relates to an X-ray analyzer.

### Background Art

Conventionally, an X-ray analyzer for analyzing fluorescent X-rays generated from a sample irradiated with X-rays has been known. For example, Japanese Unexamined Patent Application Publication No. 2018-63196 discloses an X-ray analyzer provided with a housing having a placement portion configured to place a sample thereon, an X-ray tube for irradiating the sample with X-rays through an opening provided in the placement portion, and a detector for detecting fluorescent X-rays generated form the sample. The X-ray tube and the detector are arranged below the placement portion. The sample is placed on the placement portion via a film.
WO 2004/088296 A1 describes a fluorescent X-ray analyzer adapted for helium replacement, which is easy to replace a partition film between a sample chamber and an irradiation chamber, and prevents air in the sample chamber from flowing into the irradiation chamber during analysis.
US 2013/170613 A1 describes X-ray fluorescence spectrometers that disperses fluorescence X rays and scattered X rays and X-ray fluorescence analyzers that perform quantitative analysis by using a spectroscopic system of the X-ray fluorescence spectrometer.

### Prior Art Document

### Patent Document

Patent Document 1: Japanese Unexamined Patent Application Publication No. 2018-63196

### SUMMARY OF THE INVENTION

### Problems to be Solved by the Invention

In an X-ray analyzer as described in Japanese Unexamined Patent Application Publication No. 2018-63196, there is a case in which a part of a sample drops through the opening due to the breakage of the film or the like and adheres to the detector. In such a case, there is a concern that the analysis accuracy deteriorates.

An object of the present invention is to provide an X-ray analyzer capable of suppressing dropping of a sample from a placement portion. The present invention is defined by the independent claim. Preferred examples are defined in the dependent claims.

### Effects of the Invention

In this X-ray analyzer, the holder film is further arranged below the container film supporting the sample. Therefore, even in a case where the container film is damaged, dropping of the sample from the placement portion is suppressed.

### BRIEF DESCRIPTION OF THE DRAWINGS

FIG. 1 is a diagram schematically showing a configuration of an X-ray analyzer according to one embodiment of the present invention.
FIG. 2 is enlarged view in the vicinity of a sample container and a holder.
FIG. 3 is a cross-sectional view schematically showing a modification of the holder.
FIG. 4 is a cross-sectional view schematically showing a modification of a sample container.

### EMBODIMENTS FOR CARRYING OUT THE INVENTION

Some embodiments of the present invention will be described with reference to the attached drawings. Note that in the drawings referred to below, the same or corresponding member is denoted by the same reference symbol.

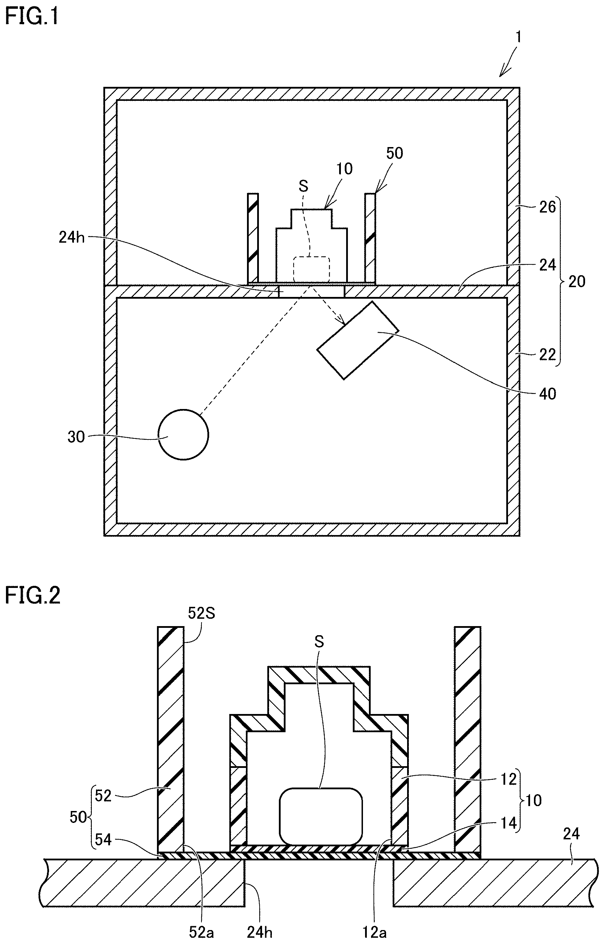

FIG. 1 is a diagram schematically showing a configuration of an X-ray analyzer according to one embodiment of the present invention. As shown in FIG. 1, the X-ray analyzer 1 is provided with a sample container 10, a casing 20, an X-ray irradiation source 30, a detector 40, and a holder 50.

The sample container 10 is a container for accommodating a sample S. As shown in FIG. 2, the sample container 10 includes a container body 12 and a container film 14.

The container body 12 surrounds the sample S and has a shaped opened downward. The container body 12 is made of, for example, polypropylene (PP).

The container film 14 closes the opening 12a (see FIG. 2) of the container body 12 and supports the sample S. In this embodiment, the container film 14 is made of polypropylene. The container film 14 is welded to the lower end of the container body 12. The container film 14 may be made of polyethylene terephthalate (PET) or the like.

The casing 20 accommodates the sample container 10 and the like. The casing 20 is made of a metallic material. As shown in FIG. 1, the casing 20 includes a housing 22, a placement portion 24, and a cover 26.

The housing 22 is constituted by the lower portion of the casing 20. The housing 22 accommodates the X-ray irradiation source 30 and the detector 40. The housing 22 has a shape opened upward.

The placement portion 24 is connected to the upper end of the housing 22. The placement portion 24 is a portion on which the sample container 10 is placed. The placement portion 24 is provided with an opening 24h for passing the X-rays emitted from the X-ray irradiation source 30. The opening 24h is set to be smaller than the outer shape of the container body 12. In other words, the outer shape of the container body 12 is larger than the opening 24h.

The cover 26 surrounds the sample container 10. The lower end of the cover 26 is connected to the outer edge of the placement portion 24.

The X-ray irradiation source 30 is accommodated in the housing 22. The X-ray irradiation source 30 irradiates the sample S placed in the sample container 10 with the X-rays from below the placement portion 24. As an example of the X-ray irradiation source 30, an X-ray tube is exemplified.

The detector 40 is accommodated in the housing 22. The detector 40 detects the fluorescent X-rays generated from the sample S that received the X-rays emitted from the X-ray irradiation source 30 below the placement portion 24. From the viewpoint of enhancing the analysis accuracy of the sample S, the detector 40 is preferably arranged in the vicinity of the opening 24h.

The holder 50 is placed on the placement portion 24 and accommodates the sample container 10. The holder 50 is configured to be removable from the placement portion 24. As shown in FIG. 2, the holder 50 includes an enclosure cylinder 52 and a holder film 54.

The enclosure cylinder 52 has a profile larger than the opening 24h. The enclosure cylinder 52 surrounds the sample container 10 and has a shape opened downward. In this embodiment, the enclosure cylinder 52 is formed in a cylindrical shape. The enclosure cylinder 52 is made of, for example, polypropylene. The height of the enclosure cylinder 52 is greater than the height of the sample container 10. The position of the enclosure cylinder 52 with respect to the opening 24h is determined by a positioning mechanism (not shown). The inner peripheral surface 52S of the enclosure cylinder 52 may gradually decrease in diameter as it approaches the placement portion 24. With this configuration, the sample container 10 is guided to a predetermined position when placing the sample container 10 in the enclosure cylinder 52 from above the enclosure cylinder 52.

The holder film 54 closes the opening 52a (see FIG. 2) of the enclosure cylinder 52. That is, two films (the container film 14 and the holder film 54) are laminated above the opening 24h. The holder film 54 is made of, for example, polypropylene. The holder film 54 is welded to the lower end of the enclosure cylinder 52. The thickness of the holder film 54 is approximately the same as the thickness of the container film 14. For example, the thickness of the holder film 54 is preferably set to 0.5 times or more and 2 times or less the thickness of the container film 14. Note that the holder film 54 may be made of polyethylene terephthalate (PET) or the like.

As described above, in the X-ray analyzer 1 according to this embodiment, the holder film 54 is further arranged below the container film 14 supporting the sample S. Therefore, even in a case where the container film 14 is, for example, damaged, dropping of the sample S from the placement portion 24 is suppressed. Therefore, contamination or the like of the detector 40 is suppressed.

It should be understood that the embodiments disclosed here are examples in all respects and are not restrictive. The scope of the present invention is indicated by claims rather than by the above-described descriptions of the embodiments.

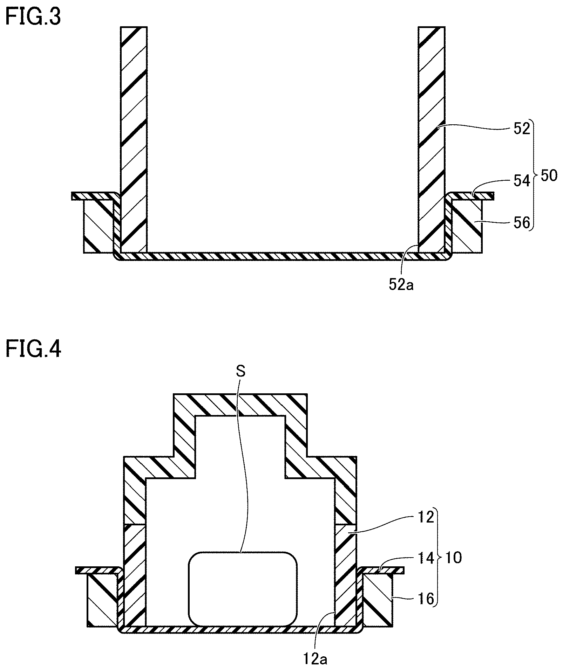

For example, as shown in FIG. 3, the holder 50 may further include a clamping ring 56. In this embodiment, the outer shape of the holder film 54 is set to be larger than the outer shape of the enclosure cylinder 52. The clamping ring 56 sandwiches the edge of the holder film 54 between the inner peripheral surface of the clamping ring 56 and the outer peripheral surface of the enclosure cylinder 52.

Further, as shown in FIG. 4, the sample container 10 may further include a clamping ring 16. In this embodiment, the outer shape of the container film 14 is set to be larger than the outer shape of the container body 12. The clamping ring 16 sandwiches the edge of the container film 14 between the inner peripheral surface of the clamping ring 16 and the outer peripheral surface of the container body 12.

### Description of Symbols

- 1:: X-ray analyzer
- 10:: Sample container
- 12:: Container body
- 14:: Container film
- 16:: Clamping ring
- 20:: Casing
- 22:: Housing
- 24:: Placement portion
- 24h:: Opening
- 26:: Cover
- 30:: X-ray irradiation source
- 40:: Detector
- 50:: Holder
- 52:: Enclosure cylinder
- 54:: Holder film
- 56:: Clamping ring
- S:: Sample

## Claims

1. An X-ray analyzer (1) comprising:
a sample container (10) configured to accommodate a sample (S);
a placement portion (24) capable of placing the sample container (10) thereon;
an X-ray irradiation source (30) configured to irradiate the sample (S) in the sample container (10) with X-rays from below the placement portion (24);
a detector (40) configured to detect fluorescent X-rays generated from the sample (S) below the placement portion (24); and
a holder (50) placed on the placement portion (24), the holder (50) being configured to accommodate the sample container (10),
wherein the placement portion (24) is provided with an opening (24h) for passing X-rays emitted from the X-ray irradiation source (30),
wherein the sample container (10) includes:
a container body (12) configured to surround the sample (S), the container body (12) being formed in a shape having an opening opened downward; and
a container film (14) configured to close the opening of the container body (12) and support the sample (S),
wherein the holder (50) includes:
an enclosure cylinder (52) having an outer shape larger than the opening (24h) of the placement portion (24), the enclosure cylinder (52) being configured to surround the sample container (10), the enclosure cylinder (52) being formed in a shape having an opening opened downward; and
a holder film (54) closing the opening of the enclosure cylinder (52), and
wherein the X-ray analyzer is **characterized in that** the container film (14) is in contact with the holder film (54).

2. The X-ray analyzer (1) as recited in claim 1,
wherein the holder film (54) is welded to a lower end portion of the enclosure cylinder (52).

3. The X-ray analyzer (1) as recited in claim 1,
wherein the holder (50) further includes a clamping ring (56) attached to a circumference of the enclosure cylinder (52), and
wherein the clamping ring (56) sandwiches an edge of the holder film (54) between an inner peripheral surface of the clamping ring (56) and an outer peripheral surface of the enclosure cylinder (52).

4. The X-ray analyzer (1) as recited in any one of claims 1 to 3,
wherein the holder (50) is configured to be detachable from the placement portion (24).

5. The X-ray analyzer (1) as recited in any one of claims 1 to 4,
wherein an outer shape of the container body (12) is larger than the opening (24h) of the placement portion (24).

## Patentansprüche

1. Röntgenanalysator (1), umfassend:
einen Probenbehälter (10), der konfiguriert ist, um eine Probe (S) aufzunehmen;
einen Platzierungsabschnitt (24), der in der Lage ist, den Probenbehälter (10) darauf zu platzieren;
eine Röntgenstrahlungsquelle (30), die konfiguriert ist, um die Probe (S) im Probenbehälter (10) von unterhalb des Platzierungsabschnitts (24) mit Röntgenstrahlen zu bestrahlen;
einen Detektor (40), der konfiguriert ist, um von der Probe (S) unterhalb des Platzierungsabschnitts (24) erzeugte Fluoreszenzröntgenstrahlen zu erkennen; und
einen Halter (50), der auf dem Platzierungsabschnitt (24) platziert ist, wobei der Halter (50) konfiguriert ist, um den Probenbehälter (10) aufzunehmen,
wobei der Platzierungsabschnitt (24) mit einer Öffnung (24h) zum Durchlassen von Röntgenstrahlen versehen ist, die von der Röntgenstrahlungsquelle (30) emittiert werden,
wobei der Probenbehälter (10) einschließt:
einen Behälterkörper (12), der konfiguriert ist, um die Probe (S) zu umgeben, wobei der Behälterkörper (12) in einer Form ausgebildet ist, die eine nach unten geöffnete Öffnung aufweist; und
eine Behälterfolie (14), die konfiguriert ist, um die Öffnung des Behälterkörpers (12) zu verschließen und die Probe (S) zu tragen,
wobei der Halter (50) einschließt:
einen Gehäusezylinder (52), dessen Außenform größer ist als die Öffnung (24h) des Platzierungsabschnitts (24), wobei der Gehäusezylinder (52) konfiguriert ist, um den Probenbehälter (10) zu umgeben, wobei der Gehäusezylinder (52) in einer Form mit einer nach unten geöffneten Öffnung ausgebildet ist; und
eine Halterfolie (54), welche die Öffnung des Gehäusezylinders (52) verschließt, und
wobei der Röntgenanalysator **dadurch gekennzeichnet ist, dass** die Behälterfolie (14) mit der Halterfolie (54) in Kontakt steht.

2. Röntgenanalysator (1) nach Anspruch 1,
wobei die Halterfolie (54) an einen unteren Endabschnitt des Gehäusezylinders (52) angeschweißt ist.

3. Röntgenanalysator (1) nach Anspruch 1,
wobei der Halter (50) ferner einen Klemmring (56) einschließt, der an einem Umfang des Gehäusezylinders (52) befestigt ist, und
wobei der Klemmring (56) eine Kante der Halterfolie (54) zwischen einer inneren Umfangsoberfläche des Klemmrings (56) und einer äußeren Umfangsoberfläche des Gehäusezylinders (52) sandwichartig einklemmt.

4. Röntgenanalysator (1) nach einem der Ansprüche 1 bis 3,
wobei der Halter (50) konfiguriert ist, um vom Platzierungsabschnitt (24) abnehmbar zu sein.

5. Röntgenanalysator (1) nach einem der Ansprüche 1 bis 4,
wobei eine Außenform des Behälterkörpers (12) größer ist als die Öffnung (24h) des Platzierungsabschnitts (24).

## Revendications

1. Analyseur à rayons X (1) comprenant :
un contenant d'échantillons (10) conçu pour recevoir un échantillon (S) ;
une partie de placement (24) pouvant se placer le contenant d'échantillons (10) sur celle-ci ;
une source d'exposition aux rayons X (30) configurée pour exposer l'échantillon (S) dans le contenant d'échantillons (10) à des rayons X depuis le dessous de la partie de placement (24) ;
un détecteur (40) configuré pour détecter des rayons X fluorescents générés par l'échantillon (S) sous la partie de placement (24) ; et
un support (50) placé sur la partie de placement (24), le support (50) étant conçu pour accueillir le contenant d'échantillons (10),
dans lequel la partie de placement (24) est pourvue d'une ouverture (24h) pour laisser passer des rayons X émis par la source d'exposition aux rayons X (30),
dans lequel le contenant d'échantillons (10) comporte :
un corps de contenant (12) conçu pour entourer l'échantillon (S), le corps de contenant (12) ayant une forme ayant une ouverture vers le bas ; et
un film de contenant (14) conçu pour fermer l'ouverture du corps de contenant (12) et supporter l'échantillon (S),
dans lequel le support (50) comporte :
un cylindre d'enceinte (52) ayant une forme extérieure plus grande que l'ouverture (24h) de la partie de placement (24), le cylindre d'enceinte (52) étant conçue pour entourer le contenant d'échantillons (10), le cylindre d'enceinte (52) ayant une forme ayant une ouverture ouverte vers le bas ; et
un film de support (54) fermant l'ouverture du cylindre d'enceinte (52), et
dans lequel l'analyseur à rayons X est **caractérisé en ce que** le film de contenant (14) est en contact avec le film de support (54).

2. Analyseur à rayons X (1) selon la revendication 1,
dans lequel le film de support (54) est soudé à une partie extrémité inférieure du cylindre d'enceinte (52).

3. Analyseur à rayons X (1) selon la revendication 1,
dans lequel le support (50) comporte en outre un anneau de serrage (56) attaché à une circonférence du cylindre d'enceinte (52), et
dans lequel l'anneau de serrage (56) prend en sandwich un bord du film de support (54) entre une surface périphérique intérieure de l'anneau de serrage (56) et une surface périphérique extérieure du cylindre d'enceinte (52).

4. Analyseur à rayons X (1) selon l'une quelconque des revendications 1 à 3,
dans lequel le support (50) est conçu pour être détachable de la partie de placement (24).

5. Analyseur à rayons X (1) selon l'une quelconque des revendications 1 à 4,
dans lequel une forme extérieure du corps de contenant (12) est plus grande que l'ouverture (24h) de la partie de placement (24).
